# EUROPÄISCHE PATENTSCHRIFT

(11) **EP 0 657 025 B1**
(45) Veröffentlichungstag und Bekanntmachung des Hinweises auf die Patenterteilung: **12.06.1996**
(21) Anmeldenummer: 93915809.3
(22) Anmeldetag: 06.07.1993
(51) Int. Cl.: G01M 3/20

(54) **GEGENSTROM-LECKSUCHER MIT HOCHVAKUUMPUMPE**
COUNTERFLOW LEAK-DETECTOR UNIT WITH A HIGH-VACUUM PUMP
DETECTEUR DE FUITES A CONTRE-COURANT AVEC POMPE A VIDE POUSSE

(30) Priorität: 26.08.1992 DE 4228313
(43) Veröffentlichungstag der Anmeldung: 14.06.1995
(73) Patentinhaber: LEYBOLD AKTIENGESELLSCHAFT, D-63450 Hanau (DE)
(72) Erfinder: GROSSE BLEY, Werner, D-5300 Bonn 1 (DE); BÖHM, Thomas, D-5000 Köln 41 (SE)
(74) Vertreter: Leineweber, Jürgen, Dipl.-Phys.
(86) Internationale Anmeldenummer: EP9301744
(87) Internationale Veröffentlichungsnummer: WO9405990

(56) Entgegenhaltungen:
- EP-A- 0 283 543
- PARENT ABSTRACTS OF JAPAN vol. 12, no. 88 (P-678)(2935) 23. März 1988 & JP,A;62 222 138 (SHIMADZU CORP ) 30. September 1987.

## Beschreibung

Die Erfindung bezieht sich auf einen Gegenstrom-Lecksucher mit einem Einlaß zum Anschluß eines Prüflings oder einer Prüflinge aufnehmenden Xammer sowie mit einem Testgasdetektor, an den eine der Erzeugung des im Detektor erforderlichen Druckes dienende Hochvakuumpumpe angeschlossen ist, wobei der Einlaß des Lecksuchers mit einem Zwischenbereich der Hochvakuumpumpe verbindbar ist.

Ein Lecksucher dieser Art ist aus der DE-PS 31 24 205 bekannt. Die in Bezug auf den Zwischenbereich hochvakuumseitig gelegene Pumpstufe ist als Gegenstromstufe ausgebildet und hat eine relativ kleine Kompression für leichte Gase, insbesondere für das in der Regel verwendete Helium. Die in den Bezug auf den Zwischenbereich vorvakuumseitig gelegene Pumpstufe (Vorstufe) dient - neben einer Vorvakuumpumpe - der Evakuierung des Prüflings oder der Prüflingskammer, so daß relativ schnelle Taktzeiten erzielt werden können. Voraussetzung dafür ist, daß die Vorstufe ein relativ hohes Saugvermögen hat. Während der Lecksuche erfolgt die Zuleitung der Prüfgase ebenfalls in den Zwischenbereich der Hochvakuumpumpe. Wegen des relativ hohen Saugvermögens der Vorstufe ist die Empfindlichkeit der Lecksuche begrenzt.

Aus der Europäischen Patentveröffentlichung 268 777 ist ein Gegenstrom-Lecksucher der eingangs erwähnten Art bekannt, bei dem der Einlaß des Lecksuchers unmittelbar mit dem Testgasdetektor, also mit der Eintrittsseite der Hochvakuumpumpe verbindbar ist. Durch diese Maßnahme läßt sich zwar prinzipiell die Empfindlichkeit steigern; in der Praxis ist diese Lösung jedoch kaum einsetzbar. Der Testgasdetektor ist üblicherweise ein auf die Masse des Testgases eingestelltes, hochempfindliches Massenspektrometer, das einen Betriebsdruck von weniger als 10⁻⁴ mbar benötigt. Durch eine unmittelbare Verbindung des Prüflings mit dem Testgasdetektor besteht die Gefahr eines unzulässig hohen Druckanstiegs mit der Folge von Fehlmessungen oder Fehlinterpretationen.

Der vorliegenden Erfindung liegt die Aufgabe zugrunde, einen Gegenstrom-Lecksucher der eingangs erwähnten Art zu schaffen, bei dem mit großer Empfindlichkeit gemessen werden kann, ohne daß die Gefahr eines unzulässig hohen Druckanstiegs im Testgasdetektor besteht.

Erfindungsgemäß wird diese Aufgabe dadurch gelöst, daß zwischen den beiden durch den Zwischenbereich getrennten Pumpstufen der Hochvakuumpumpe eine Drossel vorgesehen ist und daß der Einlaß des Lecksuchers mit der Austrittsseite der hochvakuumseitigen Pumpstufe - in Förderrichtung vor der Drossel - verbindbar ist. Bei einem in dieser Weise ausgebildeten Lecksucher wirkt sich das relativ hohe Saugvermögen der Vorstufe dort, wo der Lecksucher an die Hochvakuumpumpe angeschlossen ist, also in Förderrichtung vor der Drossel, noch nicht aus, so daß bei gegebenem Heliumgasstrom ein hoher Testgas- bzw. Helium-Partialdruck entsteht, der zusammen mit der relativ niedrigen Kompression der Gegenstromstufe die Empfindlichkeit bestimmt. Das Vorhandensein der Drossel bewirkt deshalb eine wesentliche Verbesserung der Empfindlichkeit des erfindungsgemäßen Lecksuchers im Vergleich zu dem aus der DE-PS 31 24 205 bekannten Lecksucher. Die Gefahr, daß es zu einem unzulässig hohen Druckanstieg im Testgasdetektor kommt (Europäische Veröffentlichung 268 777) besteht nicht, da zwischen dem Anschluß des Prüflings und dem Testgasdetektor die Gegenstromstufe vcrhanden ist.

Zweckmäßig ist der Einlaß des Lecksuchers zusätzlich noch mit der Eintrittsseite der Vorstufe, also in Förderrichtung hinter der Drossel, verbindbar und vorzugsweise auch noch mit der Austrittsseite der vorvakuumseitigen Pumpstufe. Bei einer derartigen Lösung besteht die Möglichkeit, die Lecksuche mit drei verschiedenen Empfindlichkeitsstufen durchführen zu können.

Die gestellte Aufgabe kann außerdem noch durch die Maßnahmen gelöst werden, daß zwischen den beiden durch den Zwischenbereich getrennten Pumpstufen der Hochvakuumpumpe eine Drossel vorgesehen ist, die regelbar oder zumindest zwischen zwei Leitwerten umschaltbar ausgebildet ist und daß der Einlaß des Lecksuchers mit der Austrittsseite der hochvakuumseitigen Pumpstufe - in Förderrichtung vor der Drossel - verbindbar ist. Wird die Drossel auf einen kleinen Leitwert eingestellt, dann kann die Lecksuche mit hoher Empfindlichkeit durchgeführt werden. Bei einem großen Leitwert der Drossel wirkt sich das volle Saugvermögen der Vorstufe im Zwischenbereich aus, so daß - bei gegebenem Heliumgasstrom - ein niedrigerer Helium-Partialdruck entsteht, die Empfindlichkeit also reduziert ist.

Weitere Vorteile und Einzelheiten der Erfindung sollen an Hand von in den Figuren 1 bis 6 dargestellten Ausführungsbeispielen erläutert werden. Es zeigen
- Figur 1 einen Gegenstrom-Lecksucher nach der Erfindung mit einer festen Drossel zwischen den beiden Hochvakuumpumpstufen,
- Figur 2 einen Gegenstrom-Lecksucher nach der Erfindung mit einer regelbaren Drossel zwischen den beiden Pumpstufen der Hochvakuumpumpe,
- Figuren 3 und 4 für einen Lecksucher der erfindungsgemäßen Art geeignete Hochvakuumpumpen mit fester Drossel,
- Figur 5 eine für einen Lecksucher der erfindungsgemäßen Art geeignete Hochvakuumpumpe mit regelbarer Drossel sowie
- Figuren 6 und 7 Details der Hochvakuumpumpe nach Figur 5.

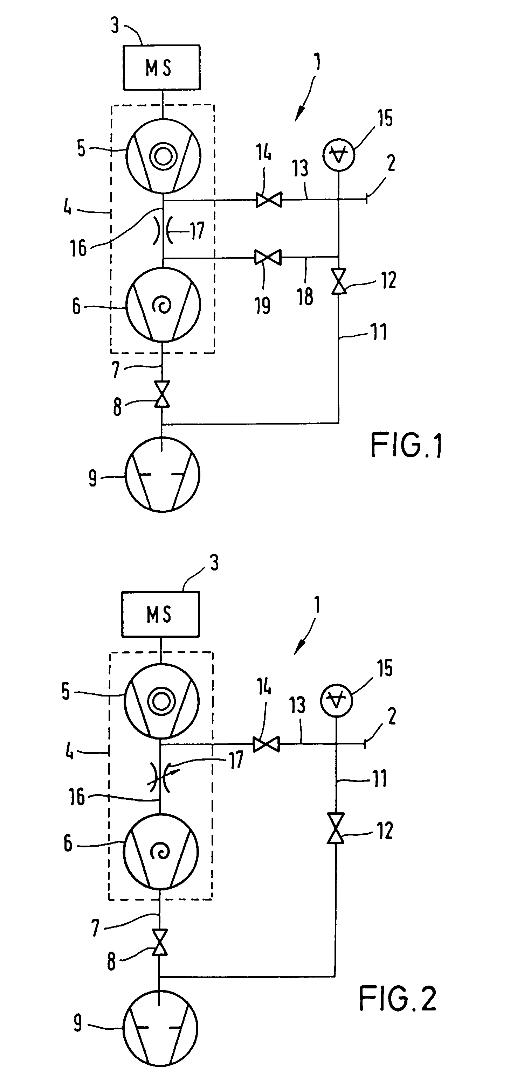

Die in den Figuren 1 und 2 dargestellten Gegenstrom-Lecksucher 1 weisen einen Anschluß 2 auf, an den ein Prüfling oder eine Kammer mit Prüflingen anschließbar ist, je nach dem, ob eine differentielle oder integrale Vakuumlecksuche durchgeführt werden soll. Als Testgasdetektor 3 dient ein Massenspektrometer, das auf die Masse des in der Regel verwendeten Helium als Testgas eingestellt ist.

Der Erzeugung des für den Betrieb des Massenspektrometers 3 notwendigen Druckes (kleiner 10⁻⁴ mbar) dient eine zweistufige Hochvakuumpumpe 4 mit den Pumpstufen 5 und 6. Das Massenspektrometer 3 ist an die Eintrittsseite der vorzugsweise als Turbomolekularpumpe ausgebildeten Pumpstufe 5 angeschlossen. Die Austrittsseite der vorzugsweise als Molekularpumpe ausgebildeten Pumpstufe 6 ist über die Leitung 7 mit dem Ventil 8 an die Eintrittsseite der Vorvakuumpumpe 9 angeschlossen. Auch der Anschluß 2 des Lecksuchers 1 ist über die Leitung 11 mit dem Ventil 12 mit der Vorvakuumpumpe 9 verbindbar. Die Leitung 11 mündet in die Leitung 7 zwischen dem Ventil 8 und der Vorvakuumpumpe 9.

Die in Figur 1 und 2 dargestellten Lecksucher 1 sind als Gegenstrom-Lecksucher ausgebildet. Die Pumpstufe 5 hat die Funktion einer Gegenstromstufe, d.h., die das Prüfgas vom Anschluß 2 dem Massenspektrometer 3 zuführende Leitung 13 mit dem Ventil 14 ist an die Austrittsseite der Gegenstromstufe 5 angeschlossen. Gegebenenfalls vorhandenes Helium strömt entgegen der Förderrichtung durch die Pumpstufe 5. Ein den Druck im Bereich des Anschlusses 2 anzeigendes Druckmeßgerät ist mit 15 bezeichnet.

Figur 1 zeigt, daß im Bereich des Überganges zwischen Gegenstromstufe 5 und Vorstufe 6 (Zwischenbereich 16) eine Drossel 17 mit festem Leitwert angeordnet ist. Die Leitung 13 mündet in den Zwischenbereich 16 in Förderrichtung der Pumpstufen, und zwar vor der Drossel 17. Zusätzlich ist der Bereich 16 über die weitere Leitung 18 mit dem Ventil 19 mit dem Anschluß 2 verbindbar, und zwar in Förderrichtung hinter der Drossel 17. Dadurch besteht die Möglichkeit, Prüfgase vor und hinter der Drossel 17 dem Zwischenbereich 16 zuzuführen. Die Ventile 14 und 19 können auch durch ein 3/2-Wegeventil ersetzt werden.

Mit dem in Figur 1 dargestellten Ausführungsbeispiel besteht die Möglichkeit, eine Lecksuche mit drei verschiedenen Empfindlichkeitsstufen durchzuführen. Das Lecksuchverfahren läuft folgendermaßen ab: Zunächst wird der nicht dargestellte, am Anschluß 2 angeschlossene Prüfling bei geschlossenen Ventilen 8, 14, 19 und offenem Ventil 12 evakuiert. Sobald ein Vorvakuumdruck erreicht ist, kann das Ventil 8 geöffnet und bereits mit einer groben Gegenstrom-Lecksuche begonnen werden. Eine Steigerung der Empfindlichkeit kann nacheinander durch Öffnen der Ventile 19 und 14 erreicht werden. Die Lecksuche bei offenem Ventil 14 ist hochempfindlich, da sich am Ort der Mündung der Leitung 13 in dem Zwischenbereich 16 das hohe Saugvermögen der Pumpstufe 6 wegen des Vorhandenseins der Drossel 17 nicht auswirkt.

Auch die Pumpstufe 6 kann - bei offenem Ventil 19 - zur weiteren Evakuierung des am Anschluß 2 angeschlossenen Prüflings oder Rezipienten verwendet werden. Dadurch besteht die Möglichkeit, eine Rückdiffusion von Öldämpfen aus der Vorvakuumpumpe 9 in den Prüfling oder Rezipienten sicher zu verhindern. Während der ersten Phase der Evakuierung durch die Pumpe 9 ist der Gasstrom laminar, so daß eine Rückströmungsmöglichkeit nicht besteht. Danach steht der Prüfling nicht mehr unmittelbar mit der Pumpe 9 in Verbindung. Der molekulare, nicht mehr laminare Gasstrom wird über die Ventile 19 oder 14 und die Vorstufe 6 abgepumpt, welche jede Öldampfrückströmung verhindert.

Beim Ausführungsbeispiel nach Figur 2 befindet sich im Zwischenbereich 16 eine in Bezug auf ihren Leitwert einstellbare Drossel 17. Bei dieser Ausführungsform kann die Leitung 18 mit dem Ventil 19 (Figur 1) entfallen. Hat die Drossel 17 einen großen Leitwert, ist die Empfindlichkeit der Lecksuche bei offenem Ventil 14 begrenzt; ist der Leitwert der Drossel 17 klein, ist die Lecksuche besonders empfindlich.

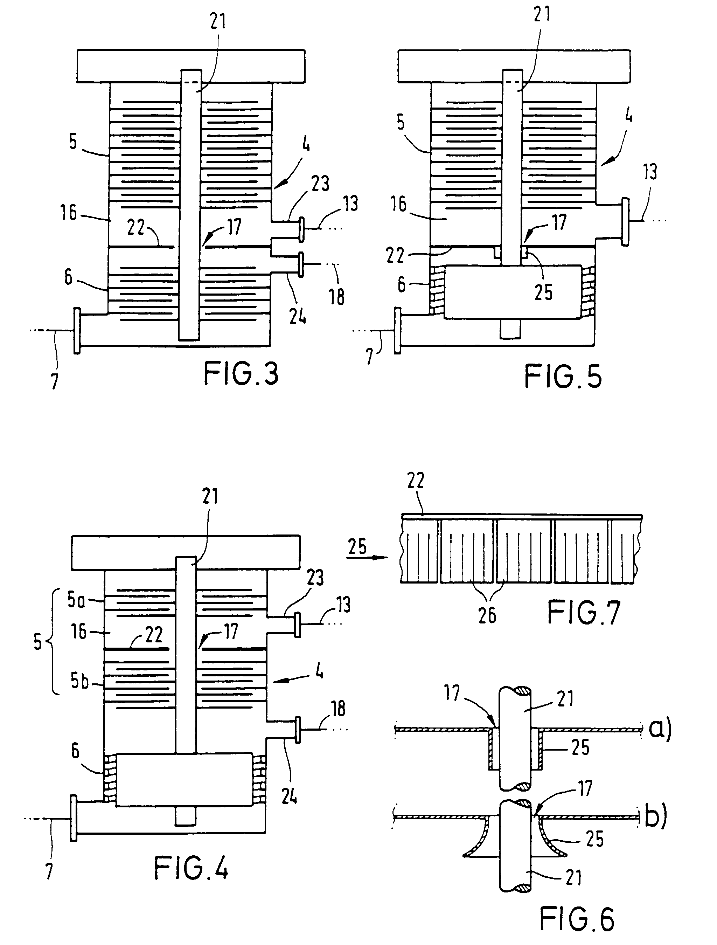

In den Figuren 3, 4 und 5 sind für einen Lecksucher nach der Erfindung geeignete Hochvakuumpumpen 4 schematisch dargestellt. Es handelt sich jeweils um eine zweistufige Reibungsvakuumpumpe 4, deren Rotoren auf einer gemeinsamen Welle 21 befestigt sind. Die erste Pumpstufe 5 bzw. 5a, 5b (Fig. 4) ist jeweils als Turbomolekularpumpstufe mit schematisch angedeuteten Rotorschaufeln und Statorschaufeln ausgebildet und hat eine Vorvakuumbeständigkeit von beispielsweise etwa 0,1 mbar und weniger. Beim Ausführungsbeispiel nach Figur 3 ist auch die Pumpstufe 6 eine Turbomolekularpumpstufe, während die Pumpstufe 6 nach den Figuren 4 und 5 eine Molekularpumpstufe (mit zylinderförmigem Rotor und gewindeähnlich gestaltetem Stator) ist. Diese Pumpstufe 6 sollte eine Vorvakuumbeständigkeit von deutlich größer 0,1 mbar, beispielsweise 1 mbar haben.

Im Zwischenbereich 16 der Hochvakuumpumpe nach Figur 3 ist eine Drossel mit feststehendem Leitwert vorgesehen. Diese besteht aus einer gehäusefesten Ringscheibe 22, die mit der Welle 21 einen die Drossel 17 bildenden Ringspalt bildet. Oberhalb und unterhalb der Scheibe 22 ist jeweiis ein Anschlußstutzen 23 und 24 vorgesehen, an die die Leitungen 13 bzw. 18 angeschlossen sind.

Beim Ausführungsbeispiel nach Figur 4 befindet sich der Zwischenbereich 16 innerhalb der Turbomolekularpumpenstufe 5, die dadurch in zwei Abschnitt 5a und 5b aufgeteilt ist. Der Anschluß 23 mit der Leitung 13 mündet in den Zwischenbereich 16, und zwar in Förderrichtung vor der Drossel 17. Der Anschluß 24 mit der Leitung 18 befindet sich zwischen den Pumpenstufen 5a, 5b und 6. Durch die Verlegung des Zwischenbereichs 16 in Richtung des Einlasses der Hochvakuumpumpe 4 kann - ohne die Drehzahl und damit die Eigenschaften der darunterliegenden Stufen zu verändern - die Empfindlichkeit der Lecksuche gesteigert werden.

Beim Ausführungsbeispiel nach Figur 5 befindet sich im Zwischenbereich 16 eine auf zwei verschiedene Leitwerte einstellbare Drossel 17. Dazu ist die Ringscheibe 22 mit einem Kragen 25 ausgerüstet, der aus Gedächtnismetall besteht. Auch nach Art von Statorschaufeln gestaltete, aus Gedächtnismetall bestehende und in Bezug auf ihren Anstellwinkel veränderbare Bauteile sind zur Bildung der Drossel 17 denkbar.

Soll die Drossel 17 nach den Figuren 5 und 6 einen kleinen Leitwert haben, hat der Kragen 25 eine etwa zylindrische Form und erstreckt sich in Bezug auf die Welle 21 axial (Figuren 5 und 6a). Von der Länge des die Drossel 17 bildenden Ringspaltes zwischen Welle 21 und Kragen 25 hängt der Leitwert der Drossel ab. Durch ein Verbiegen des Kragens 23 (freies Ende nach außen, Figur 5b) kann der Leitwert vergrößert werden.

Diese Bewegung des Kragens 25 kann mit Hilfe von Gedächtnismetall realisiert werden. Figur 7 zeigt dazu ein Ausführungsbeispiel. Der Kragen 25 ist in Form einer Abwicklung dargestellt. Er besteht aus mehreren Metallstreifen 26, die an der Ringscheibe 22 befestigt sind. Die Metallstreifen bestehen aus Gedächtnismetall. Ein Verbiegen der Metallstreifen wird durch Erhitzen des Kragens 25 über eine bestimmte Temperatur hinaus, die von der Art des eingesetzten Gedächtnismetalls abhängt, erreicht. Beim Überschreiten dieser Temperaturschwelle nehmen die Metallstreifen eine gebogene Form an, die ihnen vorher eingeprägt worden ist. Das Aufheizen geschieht durch Thermokoax, der auf das untere Ende des Rohres aufgelötet und mit einer Temperaturüberwachung versehen wird. Bei Thermokoax handelt es sich um einen "Heizdraht", der mit Keramik isoliert ist und sich in einem Edelstahlrohr befindet (Durchmesser 1-3 mm). Dadurch kann der Thermokoax sehr einfach auf die zu beheizenden flächen aufgelötet werden. Zur Heizung wird direkt durch den Draht ein Strom eingespeist.

## Patentansprüche

1. Gegenstrom-Lecksucher (1) mit einem Einlaß (2) zum Anschluß eines Prüflings oder einer Prüflinge aufnehmenden Kammer sowie mit einem Testgasdetektor (3), an den eine der Erzeugung des im Detektor erforderlichen Druckes dienende Hochvakuumpumpe (4) angeschlossen ist, wobei der Einlaß (2) des Lecksuchers mit einem Zwischenbereich (16) der Hochvakuumpumpe (4) verbindbar ist, dadurch gekennzeichnet, daß zwischen den beiden durch den Zwischenbereich (16) getrennten Pumpstufen (5, 6) bzw. Pumpstufenabschnitten (5a, 5b) der Hochvakuumpumpe (4) eine Drossel (17) vorgesehen ist und daß der Einlaß (2) des Lecksuchers (1) mit der Austrittsseite der hochvakuumseitigen Pumpstufe (5) bzw. des hochvakuumseitigen Pumpstufenabschnittes (5a) - in Förderrichtung vor der Drossel (17) - verbindbar ist.

2. Gegenstrom-Lecksucher nach Anspruch 1, dadurch gekennzeichnet, daß der Einlaß (2) des Lecksuchers (1) zusätzlich mit der Eintrittsseite der zweiten Pumpenstufe (6) - in Förderrichtung hinter der Drossel (17) - verbindbar ist.

3. Gegenstrom-Lecksucher nach Anspruch 1 oder 2, dadurch gekennzeichnet, daß der Einlaß (2) des Lecksuchers (1) zusätzlich mit der Austrittsseite der vorvakuumseitigen Pumpstufe (6) über eine Leitung (11) mit dem Ventil (12) verbindbar ist.

4. Gegenstrom-Lecksucher nach Anspruch 3, dadurch gekennzeichnet, daß sich an die Austrittsseite der vorvakuumseitigen Pumpstufe (6) eine Leitung (7) mit einem Ventil (8) und eine Vorvakuumpumpe (9) anschließen und daß die Leitung (11) zwischen Ventil (8) und Pumpe (9) in die Leitung (7) mündet.

5. Gegenstrom-Lecksucher nach einem der Ansprüche 1 bis 4, dadurch gekennzeichnet, daß die Drossel (17) einen festen Leitwert hat.

6. Gegenstrom-Lecksucher nach Anspruch 5, dadurch gekennzeichnet, daß die Hochvakuumpumpe (4) eine zweistufige Reibungsvakuumpumpe ist und daß die Drossel (17) von einer feststehenden Ringscheibe (22) gebildet wird.

7. Gegenstrom-Lecksucher (1) nach einem der Ansprüche 1 bis 4, dadurch gekennzeichnet, daß zwischen den beiden durch den Zwischenbereich (16) getrennten Pumpstufen (5, 6) bzw. Pumpstufenabschnitten (5a, 5b) der Hochvakuumpumpe (4) eine Drossel (17) vorgesehen ist, die regelbar oder zumindest zwischen zwei Leitwerten umschaltbar ausgebildet ist.

8. Gegenstrom-Lecksucher nach Anspruch 7, dadurch gekennzeichnet, daß die Hochvakuumpumpe (4) eine zweistufige Reibungsvakuumpumpe ist und daß die Drossel (17) von einer Ringscheibe (22) gebildet wird, die verstellbare Bauteile (26) zur Veränderung des Leitwertes aufweist.

9. Gegenstrom-Lecksucher nach Anspruch 7 oder 8, dadurch gekennzeichnet, daß zur Verstellung der Drossel (17) aus Gedächtnismaterial bestehende Bauteile (26) vorgesehen sind.

10. Gegenstrom-Lecksucher nach einem der vorhergehenden Ansprüche, dadurch gekennzeichnet, daß beide Pumpstufen von zwei separaten Reibungspumpen (5, 6) gebildet werden.

11. Gegenstrom-Lecksucher nach einem der Ansprüche 1 bis 9, dadurch gekennzeichnet, daß zwei auf einer Welle (21) angeordnete Rotoren Bestandteile der beiden Pumpstufen (5, 6) sind.

12. Gegenstrom-Lecksucher nach einem der vorhergehenden Ansprüche, dadurch gekennzeichnet, daß die hochvakuumseitige Pumpstufe (5) als Turbomolekularpumpstufe und die vorvakuumseitige Pumpstufe (6) als Molekularpumpstufe ausgebildet ist.

13. Gegenstrom-Lecksucher nach einem der vorhergehenden Ansprüche, dadurch gekennzeichnet, daß die erste Pumpstufe (5) der Hochvakuumpumpe eine Turbomolekularpumpstufe mit relativ kleiner Kompression für leichte Gase ist und derart bemessen ist, daß sie auf der Druckseite einen Druck von etwa 0,1 mbar und weniger erzeugt, und daß die zweite Stufe (6) eine Gewindepumpstufe mit einem relativ hohen Saugvermögen ist und derart bemessen ist, daß sie auf ihrer Austrittsseite einen Druck von mehr als 0,1 mbar, vorzugsweise etwa 1 mbar, erzeugt.

14. Gegenstrom-Lecksucher nach einem der vorhergehenden Ansprüche, dadurch gekennzeichnet, daß die hochvakuumseitige Pumpstufe (5) zwei Abschnitte (5a und 5b) aufweist und daß sich der Zwischenbereich 16 zwischen den beiden Abschnitten (5a und 5b) befindet.

## Claims

1. Counterflow leak detector (1) comprising an inlet (2) for connecting a test body or a chamber holding test bodies, and comprising a test gas detector (3), to which a high-vacuum pump (4) for generating the pressure necessary in the detector is connected, the inlet (2) of the leak detector being connectable to an intermediate region (16) of the high-vacuum pump (4), characterised in that between the two pump stages (5, 6) or pump stage sections (5a, 5b) of the high-vacuum pump (4) separated by the intermediate region (16) a throttle (17) is provided, and in that the inlet (2) of the leak detector (1) is connectable - in front of the throttle (17) in the feed direction - to the outlet side of the pump stage on the high-vacuum side or of the pump stage section (5a) on the high-vacuum side.

2. Counterflow leak detector according to claim 1, characterised in that the inlet (2) of the leak detector (1) is additionally connectable - behind the throttle (17) in the feed direction - to the inlet side of the second pump stage (6).

3. Counterflow leak detector according to claim 1 or 2, characterised in that the inlet (2) of the leak detector (1) is additionally connectable to the outlet side of the pump stage (6) on the backing side to the valve (12) via a line (11).

4. Counterflow leak detector according to claim 3, characterised in that on the outlet side of the pump stage (6) a line (7) is connected to a valve (8) and a fore pump (9), and in that the line (11) opens out into the line (7) between the valve (8) and the pump (9).

5. Counterflow leak detector according to one of claims 1 to 4, characterised in that the throttle (17) has a fixed conductance.

6. Counterflow leak detector according to claim 5, characterised in that the high-vacuum pump (4) is a two-stage pump and in that the throttle (17) is formed by a stationary annular disc (22).

7. Counterflow leak detector (1) according to one of claims 1 to 4, characterised in that between the two pump stages (5, 6) or pump stage sections (5a, 5b) of the high-vacuum pump (4) separated by the intermediate region (16), a throttle (17) is provided which is adjustable or at least capable of being switched between two conductances.

8. Counterflow leak detector according to claim 7, characterised in that the high-vacuum pump (4) is a two-stage friction vacuum pump, and in that the throttle (17) is formed by an annular disc (22) which has adjustable components (26) for varying the conductance.

9. Counterflow leak detector according to claim 7 or 8, characterised in that in order to adjust the throttle (17) components (26) made of material having a memory are provided.

10. Counterflow leak detector according to one of the preceding claims, characterised in that the two pump stages are formed of two separate friction pumps (5, 6).

11. Counterflow leak detector according to claims 1 to 9, characterised in that two rotors mounted on a shaft (21) are components of both pump stages (5, 6).

12. Counterflow leak detector according to one of the preceding claims, characterised in that the high vacuum-side pump stage (5) takes the form of a turbomolecular pump stage, and the pump stage (6) on the backing side takes the form of a molecular pump stage.

13. Counterflow leak detector according to one of the preceding claims, characterised in that the first pump stage (5) of the high-vacuum pump is a turbomolecular pump stage with relatively low compression for light gases, and is so dimensioned that it generates a pressure of approximately 0.1 mbar or less on the pressure side, and in that the second stage (6) is a threaded pump stage with relatively high suction capacity and is so dimensioned that it generates on its outlet side a pressure of more than 0.1 mbar, preferably 1 mbar.

14. Counterflow leak detector according to one of the preceding claims, characterised in that the high-vacuum side pump stage (5) has two sections (5a and 5b) and in that the intermediate region (16) is located between the two sections (5a and 5b).

## Revendications

1. Détecteur de fuites à contre-courant (1) comportant une admission (2) pour le raccordement à un échantillon ou à une chambre de réception d'un échantillon, ainsi qu'un détecteur de gaz témoin (3) auquel est raccordée une pompe à vide poussé (4) servant à produire la pression nécessaire dans le détecteur, l'admission (2) du détecteur de fuite étant susceptible d'être reliée à une région intermédiaire (16) de la pompe à vide poussé (4), caractérisé en ce qu'il est prévu un étranglement (17) entre les deux étages de pompe (5, 6) ou les tronçons (5a, 5b) d'étages de pompe, séparés par la région intermédiaire (16), de la pompe à vide poussé (4), et en ce que l'admission (2) du détecteur de fuites (1) est susceptible d'être reliée au côté sortie de l'étage de pompe (5) situé côté vide poussé ou du tronçon (5a) d'étage de pompe situé côté vide poussé - en amont de l'étranglement (17) en direction d'écoulement.

2. Détecteur de fuites à contre-courant selon la revendication 1, caractérisé en ce que l'admission (2) du détecteur de fuites (1) est additionnellement susceptible d'être reliée au côté entrée du second étage de pompe (6) - en aval de l'étranglement (17) en direction d'écoulement.

3. Détecteur de fuites à contre-courant selon l'une ou l'autre des revendications 1 et 2, caractérisé en ce que l'admission (2) du détecteur de fuites (1) est additionnellement susceptible d'être reliée au moyen de la soupape (12) au côté sortie de l'étage de pompe (6) situé côté vide préliminaire, par l'intennédiaire d'une conduite (11).

4. Détecteur de fuites à contre-courant selon la revendication 3, caractérisé en ce qu'une conduite (7) avec une soupape (8) et une pompe à vide préliminaire (9) se raccordent au côté sortie de l'étage de pompe (6) situé côté vidé préliminaire et en ce que la conduite (11) débouche dans la conduite (7) entre la soupape (8) et la pompe (9).

5. Détecteur de fuites à contre-courant selon l'une quelconque des revendications 1 à 4, caractérisé en ce que l'étranglement (17) a une conductance fixe.

6. Détecteur de fuites à contre-courant selon la revendication 5, caractérisé en ce que la pompe à vide poussé (4) est une pompe à vide à friction à deux étages et en ce que l'étranglement (17) est formé par un disque annulaire (22) fixe.

7. Détecteur de fuites à contre-courant selon l'une quelconque des revendications 1 à 4, caractérisé en ce qu'il est prévu entre les deux étages de pompe (5, 6) ou tronçons d'étage (5a, 5b) de pompe, séparés par la région intermédiaire (16), de la pompe à vide poussé (4), un étranglement (17) qui est réalisé de manière à pouvoir être réglé ou au moins commuté entre deux conductances.

8. Détecteur de fuites à contre-courant selon la revendication 7, caractérisé en ce que la pompe à vide poussé (4) est une pompe à vide à friction à deux étages, et en ce que l'étranglement (17) est formé par un disque annulaire (22) qui présente des composants (26) réglables pour faire varier la conductance.

9. Détecteur de fuites à contre-courant selon l'une ou l'autre des revendications 7 ou 8, caractérisé en ce que pour régler l'étranglement, il est prévu des composants (26) en matériau à effet de mémoire.

10. Détecteur de fuites à contre-courant selon l'une quelconque des revendications précédentes, caractérisé en ce que les deux étages de pompe sont formés par deux pompes à friction (5, 6) séparées.

11. Détecteur de fuites à contre-courant selon l'une quelconque des revendications 1 à 9, caractérisé en ce que deux rotors agencés sur un arbre (21) font partie des deux étages de pompe (5, 6).

12. Détecteur de fuites à contre-courant selon l'une quelconque des revendications précédentes, caractérisé en ce que l'étage de pompe (5) situé côté vide poussé est réalisé sous la forme d'un étage de pompe turbomoléculaire, et en ce que l'étage de pompe (6) situé côté vide préliminaire est réalisé sous la forme d'un étage de pompe moléculaire.

13. Détecteur de fuites à contre-courant selon l'une quelconque des revendications précédentes, caractérisé en ce que le premier étage (5) de la pompe à vide poussé est un étage de pompe turbomoléculaire à compression relativement faible pour gaz légers et a des dimensions telles qu'elle produit côté pression une pression d'approximativement 0,1 mbar et moins, et en ce que le second étage (6) est un étage de pompe à vis dont la puissance d'aspiration est relativement élevée et dont les dimensions sont telles qu'elle produit sur son côté sortie une pression de plus de 0,1 mbar, de préférence approximativement 1 mbar.

14. Détecteur de fuites à contre-courant selon l'une quelconque des revendications précédentes, caractérisé en ce que l'étage (5) de pompe côté vide poussé présente deux tronçons (5a et 5b) et en ce que la région intermédiaire 16 se trouve entre ces deux tronçons (5a et 5b).
